# EUROPEAN PATENT APPLICATION

(11) **EP 4 611 147 A1**
(43) Date of publication of application: **03.09.2025**
(21) Application number: 23913978.5
(22) Date of filing: 04.01.2023
(51) Int. Cl.: H01M 50/342, H01M 50/103

(54) **CASE COMPONENT, BATTERY CELL, BATTERY, AND ELECTRICAL DEVICE**

(71) Applicant: Contemporary Amperex Technology (Hong Kong) Limited, Central (HK)
(72) Inventor: BAI, Lulu, Ningde City, Fujian 352100 (CN); ZHENG, Ting, Ningde City, Fujian 352100 (CN); LI, Quankun, Ningde City, Fujian 352100 (CN)
(74) Representative: Gong, Jinping
(86) International application number: PCT/CN2023/070426
(87) International publication number: WO 2024/145819

(57) **Abstract**

The embodiment of the present application provides a housing component, a battery cell, a battery and an electrical device, belonging to the field of battery technology. The housing component is used for the battery cell, and the housing component has a first surface, and the first surface is provided with a sink groove, and the bottom wall of the sink groove includes a first area and a second area, and the thickness of the first area is less than the thickness of the second area, and at least a part of the first area is provided with a notch groove, and the housing component is configured to rupture at the notch groove to release the pressure inside the battery cell. The housing component has low difficulty in processing and manufacturing, and low processing and manufacturing costs, thereby reducing the processing and manufacturing costs of the battery cell and the battery.

## Description

### Technical Field

The present application relates to the technical field of batteries, and particularly to a housing component, a battery cell, a battery and an electrical device.

### Background

Energy conservation and emission reduction are the key to the sustainable development of the automobile industry. Electric vehicles have become an important part of the sustainable development of the automobile industry due to their advantages in energy conservation and environmental protection. For electric vehicles, battery technology is an important factor related to their development.

In development of the battery technology, processing and manufacturing cost is a problem that cannot be ignored in addition to improving the energy density of battery. Therefore, how to reduce processing and manufacturing cost is a technical problem that battery technology needs to be solved urgently.

### Summary of the Invention

The purpose of the present application is to provide a housing component, a battery cell, a battery and an electrical device. The housing component has a low processing and manufacturing difficulty and a low processing and manufacturing cost, thereby reducing the processing and manufacturing cost of the battery cell and the battery.

The present application is implemented by the following technical solutions:

In a first aspect, the present application provides a housing component for a battery cell, wherein the housing component has a first surface, the first surface is formed with a sink groove, the groove bottom wall of the sink groove includes a first area and a second area, the thickness of the first area is less than the thickness of the second area, at least a portion of the first area is formed with a notch groove, and the housing component is configured to rupture at the notch groove to release the pressure inside the battery cell.

According to the housing component of the embodiment of the present application, the groove bottom wall of the sink groove serves as a pressure relief structure of the housing component, the groove bottom wall is divided into areas, the thickness of the first area and the second area are different, the first area is thinner, the notch groove is formed in at least a portion of the first area, and the second area is thicker, so that the processing difficulty of the housing component is low, the processing and manufacturing cost is reduced, and the processing and manufacturing cost of the battery cell formed by the housing component is further reduced.

According to some embodiments of the present application, the first area surrounds at least a portion of the second area.

In the above solution, the first area is arranged around at least a portion of the second area, which is convenient for forming the notch groove, and a relatively long notch groove can be formed, and the second area can be opened with the notch groove as the boundary, thereby forming a pressure relief channel.

According to some embodiments of the present application, the first area connects the second area and the groove side wall of the sink groove.

In the above solution, the first area is located between the groove side wall of the sink groove and the second area, which is convenient for processing and manufacturing. The first area can have a larger area, which is convenient for setting a longer notch groove and facilitating pressure relief.

According to some embodiments of the present application, the notch groove surrounds at least a portion of the second area.

In the above solution, the notch groove surrounds at least a portion of the second area, and the notch groove can have a longer length, which is convenient for opening the second area, so as to facilitate timely pressure relief after the notch groove is broken.

According to some embodiments of the present application, the notch groove is a closed annular groove.

In the above solution, the notch groove is a closed annular groove, which is convenient for the notch groove to be broken, and convenient for the opening of the second area. After the notch groove is broken, it has a larger pressure relief channel.

According to some embodiments of the present application, the number of second areas is two, the first area includes a first sub-area and a second sub-area, the first sub-area is of a ring structure, the first sub-area surrounds two second areas, the second sub-area is located between the two second areas, and two ends of the second sub-area are respectively connected to the first sub-area.

In the above solution, the first sub-area surrounds the two second areas, the second sub-area is located between the two second areas, and the position of the notch groove is flexible, which is convenient for pressure relief; at the same time, when the housing component is stamped and formed, the stress is concentrated at the connection between the second sub-area and the first sub-area, which is easy to rupture and convenient for pressure relief.

According to some embodiments of the present application, the notch groove includes a first sub-notch groove, a second sub-notch groove and a third sub-notch groove, the first sub-notch groove and the second sub-notch groove are formed in the first sub-area, the third sub-notch groove is formed in the second sub-area, the two second areas are located between the first sub-notch groove and the second sub-notch groove, and the two ends of the third sub-notch groove are connected to the first sub-notch groove and the second sub-notch groove respectively.

In the above solution, the first sub-notch groove, the second sub-notch groove and the third sub-notch groove are formed at different positions, so as to increase the rupture area of the housing component and facilitate pressure relief.

According to some embodiments of the present application, the first sub-notch groove and the second sub-notch groove are arranged in parallel.

In the above solution, the first sub-notch groove and the second sub-notch groove are arranged in parallel, which is convenient for processing and manufacturing.

According to some embodiments of the present application, the second area protrudes from the first area in the direction of the opening of the sink groove, and the opening is arranged opposite to the groove bottom wall.

In the above solution, the second area protrudes from the first area in the direction of the opening of the sink groove, which is convenient for processing and manufacturing, for example, convenient for stamping and forming.

According to some embodiments of the present application, the second area has a second surface facing the opening, and the second surface is a plane.

In the above solution, the second surface is a plane, the structure is simple, and it is easy to process.

According to some embodiments of the present application, the thickness of the first area is H1, and the thickness of the second area is H2, satisfying: 0.3mm≤H2-H1 ≤ 1.5mm.

In the above solution, the thickness H1 of the first area and the thickness H2 of the second area satisfy the above relationship. On the one hand, it can make the groove bottom wall have a higher strength. On the other hand, when stamping and forming, it is convenient for the flow of materials and reduces the difficulty of manufacturing. If H2-H1 is small (e.g., less than 0.3mm), the second area is thinner, and the processing and manufacturing difficulty is higher; if H2-H1 is large (e.g., greater than 1.5 mm), the first area is thinner, the strength of the first area is lower, and the notch groove is easy to crack in advance when it is not in the pressure relief state, affecting the service life.

According to some embodiments of the present application, 0.5mm≤H2-H1≤1mm.

In the above solution, compared with 0.3mm≤H2-H1≤1.5mm, when 0.5mm≤H2-H1≤1mm, the second area can be thicker, which is convenient for processing and manufacturing, and the strength of the groove bottom wall is higher.

According to some embodiments of the present application, the second area has a second surface facing the opening, and the second surface is a curved surface arched toward the opening.

In the above solution, the second surface arches toward the opening, the second area has a higher strength, which is convenient for processing and manufacturing, and the processing and manufacturing difficulty is lower.

According to some embodiments of the present application, the thickness of the first area is H1, and the maximum thickness of the second area is H3, satisfying: 0.3mm≤H3-H1≤ 2mm.

In the above solution, the thickness H1 of the first area and the maximum thickness H3 of the second area satisfy the above relationship. On the one hand, the groove bottom wall can have a higher strength. On the other hand, when stamping and forming, it is convenient for the flow of materials and reduces the manufacturing difficulty. If H3-H1 is small (such as less than 0.3mm), the the second area is thinner, and the processing and manufacturing difficulty is higher; if H3-H1 is large (such as greater than 2mm), the the first area is thinner, the strength of the first area is lower, and the notch groove is easy to crack in advance when it is not in the pressure relief state, affecting the service life.

According to some embodiments of the present application, 0.5mm≤H3-H1≤1mm.

In the above solution, compared with 0.3mm≤H3-H1≤2mm, when 0.5mm≤H3-H1 ≤1mm, the second area can be thicker, which is convenient for processing and manufacturing, and the strength of the bottom wall of the groove is higher.

According to some embodiments of the present application, the sink groove is a stepped groove, which includes a first groove section and a second groove section, the first groove section is closer to the first surface than the second groove section, and the groove bottom wall is the bottom wall of the second groove section.

In the above solution, the sink groove is a stepped groove, the first area and the second area are located on the bottom wall of the second groove section, which is convenient for processing and manufacturing; when the sink groove is stamped and formed, it is convenient for material accumulation, and the processing and manufacturing difficulty is relatively low.

According to some embodiments of the present application, the difference between the groove width of the first groove section and the groove width of the second groove section is

K1, satisfying: 1mm≤K1≤8mm.

In the above solution, the groove width of the first groove section and the groove width of the second groove section satisfy the above relationship, which is convenient for processing and manufacturing and occupies a small space; when the sink groove is stamped and formed, it is convenient for material accumulation and the difficulty of stamping and forming is low. If K1 is small (less than 1mm), the processing and manufacturing difficulty is high, and the strength of the housing component at the sink groove is low; if K1 is large (such as greater than 8mm), the area of the step surface between the first groove section and the second groove section is large, the occupied space is large, and the material is wasted.

According to some embodiments of the present application, 4mm≤K1≤6mm.

In the above solution, compared with 1mm≤K1≤8mm, when 4mm≤K1≤6mm, on the one hand, it is convenient for processing and manufacturing, for example, when stamping and forming, it is convenient for material accumulation; on the other hand, while the strength of the housing component at the sink groove is high, the sink groove occupies a small space.

According to some embodiments of the present application, the groove depth of the first groove section is W1, satisfying: 0.1mm≤W1≤1mm.

In the above solution, the groove depth of the first groove section satisfies the above relationship, which is convenient for processing and manufacturing. For example, when stamping and forming, it is convenient for material accumulation; if W1 is small (such as less than 0.1mm), the processing technology requirements are high and it is not easy to process and manufacture; if W1 is large (such as greater than 1mm), the groove depth of the second groove section is small, the groove bottom wall is thin, and the strength of the groove bottom wall is low.

According to some embodiments of the present application, 0.3mm≤W1≤0.7mm.

In the above solution, compared with 0.1mm≤W1≤1mm, when 0.3mm≤W1≤ 0.7mm, it is convenient for processing and manufacturing, and the groove bottom wall has a higher strength.

According to some embodiments of the present application, the groove depth of the second groove section is W2, satisfying: 0.5mm≤W2≤4mm.

In the above solution, the groove depth of the second groove section satisfies the above relationship, which is convenient for processing and manufacturing. For example, when stamping and forming, it is convenient for material accumulation; if the groove depth of the second groove section is small (such as less than 0.5mm), the groove bottom wall is thicker, and the processing difficulty of the notch groove is higher; if the groove depth of the second groove section is large (such as greater than 4mm), the groove bottom wall is thinner, and the strength of the groove bottom wall is lower.

According to some embodiments of the present application, 1.5mm≤W2≤3mm.

n the above solution, compared with 0.5mm≤W2≤4mm, when 1.5mm≤W2≤3mm, it is convenient for processing the notch groove, and the groove bottom wall is thicker, and the groove bottom wall has higher strength.

According to some embodiments of the present application, the housing component further has a third surface, the third surface is arranged opposite to the first surface along the thickness direction of the housing component, and a convex portion is formed on the third surface, the convex portion corresponds to the position of the sink groove, and the projection of the sink groove falls into the projection of the convex portion along the thickness direction.

In the above solution, the arrangement of the convex portion facilitates the stamping and forming of the housing component, and the difficulty of processing and manufacturing is relatively low.

According to some embodiments of the present application, a convex portion is formed on the first surface, and the convex portion surrounds the sink groove. The housing component further has a third surface, the third surface is arranged opposite to the first surface along the thickness direction of the housing component, and a first groove is formed on the third surface at a position corresponding to the convex portion.

In the above solution, the protrusion can protect the sink groove and reduce the risk of impurities (such as electrolyte, etc.) entering the sink groove; the first groove corresponds to the position of the protrusion, the protrusion can be stamped and formed, the processing and manufacturing difficulty is low, and the material is used reasonably.

According to some embodiments of the present application, the protrusion surrounds the second groove, the sink groove is a stepped groove, which includes a first groove section and a second groove section, the first groove section is closer to the first surface than the second groove section, the groove bottom wall is the bottom wall of the second groove section, and the difference between the groove width of the second groove and the groove width of the first groove section is K2, satisfying: 1mm≤K2≤8mm.

In the above solution, the groove width of the second groove and the groove width of the first groove section meet the above relationship, the processing and manufacturing difficulty is low, and the second groove occupies less space; if K2 is large (such as greater than 8mm), the structural space is wasted; if K2 is small (such as less than 1mm), the processing and manufacturing difficulty is high.

According to some embodiments of the present application, 2mm≤K2≤4mm.

In the above solution, compared with 1mm≤K2≤8mm, when 2mm≤K2≤4mm, the second groove occupies less space and is less difficult to manufacture.

According to some embodiments of the present application, the housing component is an end cover, and the end cover is configured to close the opening of the shell body of the battery cell.

According to some embodiments of the present application, the thickness of the second area is less than the thickness of the end cover.

In the above solution, the thickness of the end cover refers to the thickness of the area of the end cover where no through hole, step hole, recess or other structures are provided. **In** the embodiment where the housing component includes a third surface, the thickness of the end cover can be the distance between the first surface and the third surface in a direction perpendicular to the first surface. The thickness of the second area is less than the thickness of the end cover, and the strength of the groove bottom wall can be weaker than the strength of the part of the end cover where no through hole, step hole, recess or other structures are provided, so that the notch groove of the groove bottom wall is easy to rupture when the battery cell is thermally runaway, so as to release the pressure inside the battery cell.

According to some embodiments of the present application, the housing component is a shell body, and the shell body includes a plurality of wall portions, and the plurality of wall portions jointly define an accommodating space, and the accommodating space is configured to accommodate the electrode assembly of the battery cell, and the sink groove is formed in at least one of the plurality of wall portions.

According to some embodiments of the present application, the thickness of the second area is less than the thickness of the wall portion formed with the sink groove.

In the above solution, the thickness of the wall portion formed with the sink groove refers to the thickness of the area of the wall portion where no through hole, step hole, recess or other structures are provided. In the embodiment where the housing component includes a third surface, the thickness of the wall portion formed with the sink groove may be the distance between the first surface and the third surface in a direction perpendicular to the first surface. The thickness of the second area is less than the thickness of the wall portion formed with the sink groove, and the strength of the groove bottom wall may be weaker than the strength of the portion of the wall portion where no through hole, step hole, recess or other structures are provided, so that the notch groove of the groove bottom wall is easily broken when the battery cell is thermally runaway, so as to release the pressure inside the battery cell.

In the second aspect, the present application further provides a battery cell, including the housing component provided by any of the above embodiments.

In the third aspect, the present application further provides a battery, including the battery cell provided by any of the above embodiments.

In the fourth aspect, the present application further provides an electrical device, including the battery provided by any of the above embodiments.

The above description is only an overview of the technical solution of the present application. In order to more clearly understand the technical means of the present application, it can be implemented according to the contents of the specification, and in order to make the above and other purposes, features and advantages of the present application more obvious and easy to understand, the specific implementation modes of the present application are specifically listed below.

### Description of Drawings

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural view of a vehicle provided in some embodiments of the present application.
FIG. 2 is an exploded view of a battery provided in some embodiments of the present application.
FIG. 3 is an exploded view of a battery cell provided in some embodiments of the present application.
FIG. 4 is a schematic structural diagram of a housing component provided in some embodiments of the present application.
FIG. 5 is a top view of a housing component provided in some embodiments of the present application;
FIG. 6 is a sectional view of FIG. 5 in A-A direction;
FIG. 7 is a top view of a housing component provided in some other embodiments of the present application;
FIG. 8 is a sectional view of a sink groove of a housing component provided in some embodiments of the present application;
FIG. 9 is a sectional view of a sink groove of a housing component provided in some other embodiments of the present application;
FIG. 10 is a schematic structural diagram of a housing component provided in some other embodiments of the present application;

In the accompanying drawings, the drawings are not drawn according to the actual scale.

Explanation of reference numerals: 100-battery; 10-box; 11-first sub-box; 12-second sub-box; 20-battery cell; 21-housing; 211-end cover; 21a-electrode terminal; 212-shell body; 2121-peripheral wall; 2122-bottom wall; 22-electrode assembly; 221-tab; 23-housing component; 231-first surface; 232-sink groove; 2320-groove bottom wall; 2321-first area; 2321a-first sub-area; 2321b-second sub-area; 2322-second area; 2322a-second surface; 2323-notch groove; 2323a-first sub-notch groove; 2323b-second sub-notch groove; 2323c-third sub-notch groove; 2324-first groove section; 2325-second groove section; 233-third surface; 234-convex portion; 235-protrusion; 236-first groove; 200-controller; 300-motor; 1000-vehicle.

### Detailed Description

Below in conjunction with the drawings and embodiments, the implementation mode of the present application is described in further detail. The detailed description of following embodiments and the accompanying drawings are used to illustrate the principle of the present application by way of example, but will not be used to limit the scope of the present application, i.e. the present application is not limited to described embodiments.

Unless otherwise defined, all technical and scientific terms used in the present application have the same meaning as commonly understood by those skilled in the art belonging to the technical field of the present application. The terms used in the specification of the present application are intended only for the purpose of describing specific embodiments and are not intended to limit the present application. The terms "including" and "having" and any variations thereof in the specification and claims of the present application and in the description of drawings above are intended to cover non-exclusive inclusion.

In the description of the embodiments of the present application, the technical terms "first", "second", etc. are only used to distinguish different objects and cannot be understood as indicating or implying relative importance or implicitly indicating the number, specific order or primary and secondary relationship of the indicated technical features.

The reference to "embodiments" in the present application means that specific features, structures or characteristics described in conjunction with embodiments may be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described herein may be combined with other embodiments.

In the description of the embodiments of the present application, the term "multiple" refers to more than two (including two), similarly, "multiple groups" refers to more than two groups (including two groups), and "multiple sheets'" refers to more than two sheets (including two sheets), unless otherwise clearly and specifically limited.

In the description of the embodiments of the present application, the technical terms "center", "longitudinal", "lateral", "length", "width", "thickness", "upper", "lower", "front", "back", "left", "right", "vertical", "horizontal", "top", "bottom", "inner", "outer", "clockwise", "counterclockwise", "axial", "radial", "circumferential" and the like indicate the orientation or positional relationship based on the orientation or positional relationship shown in the drawings, which is only for the convenience of describing the embodiments of the present application and simplifying the description, and does not indicate or imply that the device or element referred to must have a specific orientation, be constructed and operated in a specific orientation, and therefore cannot be understood as limiting the embodiments of the present application.

In description of the present application, it should be noted that, unless otherwise clearly specified and limited, the terms "install", "link", "connect", and "fix" should be understood in a broad sense, for example, it can be a fixed connection, a detachable connection, or an integral connection; it can also be a mechanical connection or an electrical connection; it can be a direct connection, or an indirect connection through an intermediate medium, or it can be an internal communication of two elements or an interaction between two elements. For those of ordinary skill in the art, the specific meanings of the above terms in the present application can be understood according to the specific circumstances.

In the description of the embodiments of the present application, the term "multiple" refers to more than two (including two), similarly, "multiple groups" refers to more than two groups (including two groups), and "multiple sheets'" refers to more than two sheets (including two sheets), unless otherwise clearly and specifically limited.

In the present application, the battery mentioned refers to a single physical module including one or more battery cells to provide higher voltage and capacity.

The battery cell includes an electrode assembly and an electrolyte, and the electrode assembly is composed of a positive electrode sheet, a negative electrode sheet and a separator film. The battery cell mainly relies on the movement of metal ions between the positive electrode sheet and the negative electrode sheet to work. The positive electrode sheet includes a positive electrode collector and a positive electrode active material layer, the positive electrode active material layer is coated on the surface of the positive electrode collector, and the current collector not coated with the positive electrode active material layer serves as the positive electrode tab. Taking lithium-ion batteries as an example, the material of the positive electrode collector can be aluminum, and the positive electrode active material can be lithium cobalt oxide, lithium iron phosphate, ternary lithium or lithium manganese oxide, etc. The negative electrode sheet includes a negative electrode collector and a negative electrode active material layer, the negative electrode active material layer is coated on the surface of the negative electrode collector, and the current collector not coated with the negative electrode active material layer serves as the negative electrode tab. The material of the negative electrode collector can be copper, and the negative electrode active material can be carbon or silicon, etc. In order to ensure that a large current can pass without melting, multiple positive electrode tabs are provided and stacked together, and multiple negative electrode tabs are provided and stacked together. The material of the separator film can be PP (polypropylene) or PE (polyethylene), etc.

The battery cell further includes a housing component, which can be an end cover or a shell body. The end cover closes the opening of the shell body to define an accommodating space for accommodating the electrode assembly.

The development of battery technology must consider multiple design factors at the same time, such as performance parameters such as energy density, discharge capacity, and charge and discharge rate. In addition, the processing and manufacturing cost of the battery also needs to be considered.

The processing and manufacturing cost of the housing component affects the processing and manufacturing cost of the battery cell. In the related art, in order to improve the safety of the battery cell, the housing component needs to be provided with a pressure relief structure to release the pressure inside the battery cell when the battery cell is thermally runaway. The processing and molding of the pressure relief structure of the housing component affects the processing and manufacturing cost of the housing component. The pressure relief structure is usually a weak part of the housing component. During the processing and manufacturing process, a certain area of the housing component is usually processed into a thinner weak part. For example, a certain thickness of material needs to be cut and removed on the housing component by a tool, or a certain area of the housing component needs to be stamped and formed into a thinner area. However, in order to release the pressure in time, the weak part needs to have a certain area. When the weak part has an enlarged area, no matter which processing method is used, it is difficult to process the housing component into a thinner weak part, which makes the processing and manufacturing cost of the housing component high, and further makes the processing and manufacturing cost of the battery cell high.

In view of this, in order to solve the problem that the processing and manufacturing of the housing component is difficult and leads to the high manufacturing cost of the battery cell, the inventor has designed a technical solution after in-depth research, which reduces the processing and manufacturing difficulty by setting the area of the housing component where the pressure relief structure needs to be set to different thicknesses, thereby reducing the processing and manufacturing cost of the housing component.

In the above solution, the housing component includes a sink groove, which is a pressure relief structure. The groove bottom wall of the sink groove is set into a first area and a second area of different thicknesses. At least a portion of the first area is formed with a notch groove. The thickness of the second area is greater than the thickness of the first area. The thickness of the second area is consistent with the thickness of the first area without processing. During stamping and forming, it is conducive to material flow and convenient for material accumulation in the second area, thereby reducing the difficulty of processing and manufacturing the housing component, reducing the processing and manufacturing cost of the housing component, and further reducing the processing and manufacturing cost of the battery cell composed of the housing component. At the same time, the thickness of the second area is relatively thick, so that the groove bottom wall has a strong strength, reducing the risk of premature rupture of the notch groove when the housing component is in a non-pressure relief state, so that the housing component has a longer service life.

The battery cell disclosed in the embodiment of the present application can be used in, but not limited to, electrical device such as vehicles, ships or aircraft. The power supply system of the electrical device can be composed of the battery cell, battery, etc. disclosed in the present application.

The embodiment of the present application provides an electrical device that uses a battery as a power source. The electrical device may be, but is not limited to, a mobile phone, a tablet computer, a laptop computer, an electric toy, an electric tool, an electric bicycle, an electric motorcycle, an electric car, a ship, a spacecraft, and the like. Among them, the electric toy may include a fixed or mobile electric toy, such as a game console, an electric car toy, an electric ship toy, and an electric airplane toy, and the like, and the spacecraft may include an airplane, a rocket, a space shuttle, and a spaceship, and the like.

For the convenience of explanation, the following embodiments are described by taking a vehicle as an example of an electrical device in an embodiment of the present application.

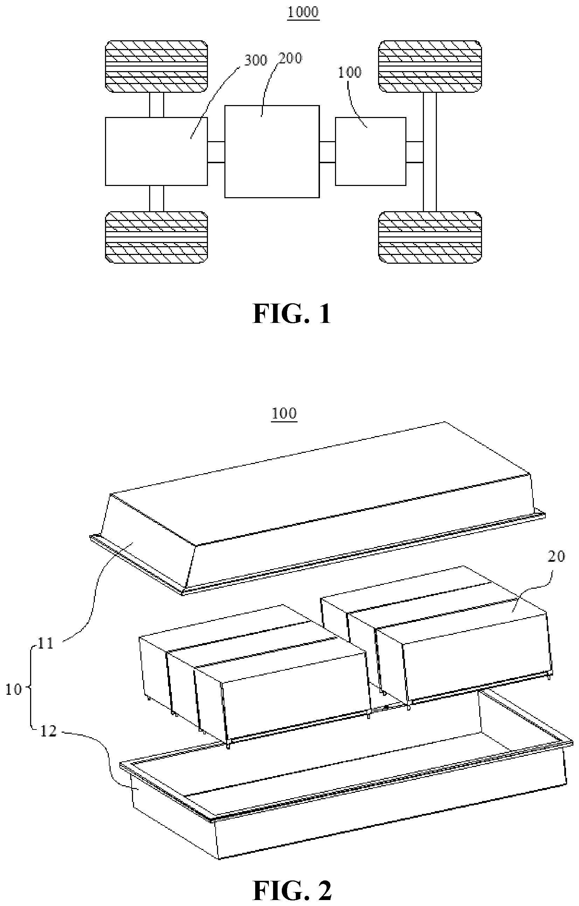

Referring to FIG. 1, FIG. 1 is a schematic structural view of a vehicle 1000 provided in some embodiments of the present application. The vehicle 1000 may be a fuel vehicle, a gas vehicle or a new energy vehicle which may be a pure electric vehicle, a hybrid vehicle or an extended-range vehicle, etc. A battery 100 is provided inside the vehicle 1000, and the battery 100 may be arranged at the bottom, head or tail of the vehicle 1000. The battery 100 may be configured to supply power to the vehicle 1000. For example, the battery 100 may be used as an operational power supply of the vehicle 1000. The vehicle 1000 may further include a controller 200 and a motor 300. The controller 200 is configured to control the battery 100 to supply power to the motor 300, so as to meet the working power demand for starting, navigation and driving of the vehicle 1000.

The vehicle 1000 may further include a controller 200 and a motor 300, the controller 200 is used to control the battery 100 to supply power to the motor 300, for example, to meet the power requirements of starting, navigating, and driving the vehicle 1000.

In some embodiments of the present application, the battery 100 not only may serve as an operational power supply of the vehicle 1000, but also may serve as a driving power supply of the vehicle 1000, thus replacing or partially replacing fuel or natural gas to provide driving power for the vehicle 1000.

Referring to FIG. 2, FIG. 2 is an exploded view of a battery 100 provided in some embodiments of the present application. The battery 100 includes a box 10 and a battery cell 20, and the battery cell 20 is accommodated in the box 10, the box 10 may be of a variety of structures. In some embodiments, the box 10 may include a first sub-box 11 and a second sub-box 12, the first sub-box 11 and the second sub-box 12 cover each other, and the first sub-box 11 and the second sub-box 12 jointly define an accommodating space for accommodating the battery cell 20. The second sub-box 12 may be of a hollow structure with one end open, and the first sub-box 11 may be of a plate-like structure, and the first sub-box 11 covers the open side of the second sub-box 12, so that the first sub-box 11 and the second sub-box 12 jointly define an accommodating; the first sub-box 11 and the second sub-box 12 may also be of hollow structures with one side open, and the open side of the first sub-box 11 covers the open side of the second sub-box 12.

In the battery 100, there may be multiple battery cells 20, and the multiple battery cells 20 may be connected in series, in parallel, or in a mixed connection. The mixed connection means that the multiple battery cells 20 are both connected in series and in parallel. The multiple battery cells 20 may be directly connected in series, in parallel, or in the mixed connection, and then the whole formed by the multiple battery cells 20 is accommodated in the box 10; of course, the battery 100 may also be in a form of a battery module which is formed by connecting multiple battery cells 20 in series, in parallel, or in a mixed connection, and then the multiple battery modules are connected in series, in parallel, or in a mixed connection to form a whole, which is accommodated in the box 10. The battery 100 may also include other structures. For example, the battery 100 may also include a current collector component for realizing electrical connection between the multiple battery cells 20.

Herein, the battery cell 20 may be a secondary battery or a primary battery; the battery cell 20 may also be a lithium-sulfur battery, a sodium-ion battery, or a magnesium-ion battery, but is not limited thereto.

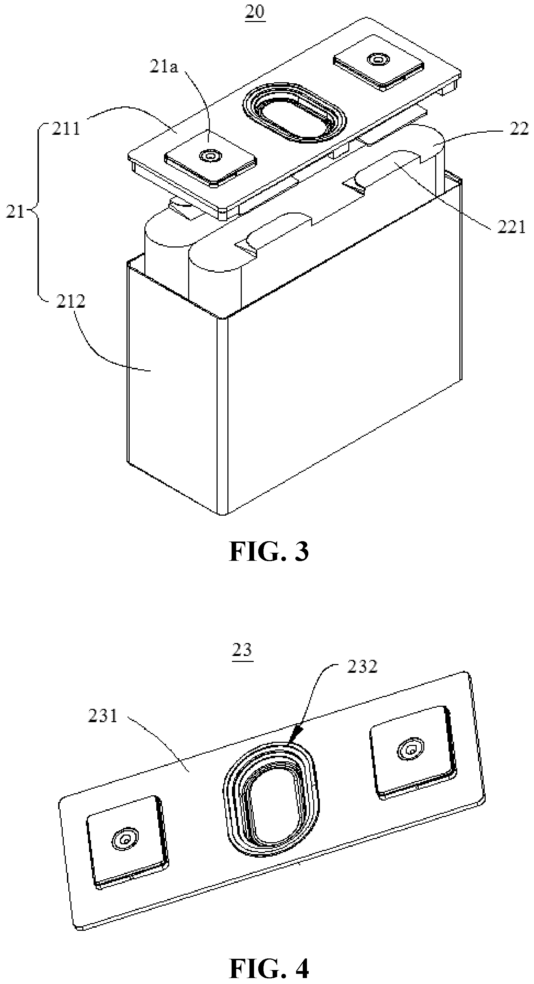

Referring to FIG. 3, which is an exploded view of a battery cell provided in some embodiments of the present application. As shown in FIG. 3, the battery cell 20 includes a housing 21, an electrode assembly 22 and other functional components.

The housing 21 includes an end cap 211 and a shell body 212, the shell body 212 has an opening, and the end cap 211 closes the opening.

The end cap 211 refers to a component that covers the opening of the shell body 212 to isolate the internal environment of the battery cell 20 from the external environment. Without limitation, the shape of the end cap 211 can be adapted to the shape of the shell body 212 to match the shell body 212. Optionally, the end cap 211 can be made of a material with a certain hardness and strength (such as aluminum alloy), so that the end cap 211 is not easily deformed when squeezed and collided, and the battery cell 20 can have a higher structural strength and the safety performance can also be improved. Functional components such as electrode terminals 21a can be provided on the end cap 211. The electrode terminal 21a can be configured to be electrically connected to the electrode assembly 22 to output or input the electrical energy of the battery cell 20. The material of the end cap 211 may also be various, such as copper, iron, aluminum, stainless steel, aluminum alloy, etc. In some embodiments, an insulating structure may also be provided on the inner side of the end cap 211, and the insulating structure may be configured to isolate the electrical connection components in the housing 212 from the end cap 211 to reduce the risk of short circuit. Exemplarily, the insulating structure may be plastic, rubber, etc.

The shell body 212 is a component configured to cooperate with the end cap 211 to form an internal environment of the battery cell 20, wherein the formed internal environment may be used to accommodate the electrode assembly 22, electrolyte, and other components. The shell body 212 and the end cap 211 may be independent components. The shell body 212 may be of various shapes and sizes. Specifically, the shape of the shell body 212 may be determined according to the specific shape and size of the electrode assembly 22. The material of the housing 212 may be various, such as copper, iron, aluminum, stainless steel, aluminum alloy, etc. The embodiment of the present application takes the housing 212 as a rectangular parallelepiped as an example.

The electrode assembly 22 is a component in the battery cell 20 where an electrochemical reaction occurs. The housing 212 may contain one or more electrode assemblies 22. The electrode assembly 22 is mainly formed by winding or stacking the positive electrode sheet and the negative electrode sheet, and a separator film is usually provided between the positive electrode sheet and the negative electrode sheet, and the separator film is used to separate the positive electrode sheet and the negative electrode sheet to avoid short circuit between the positive electrode sheet and the negative electrode sheet. The parts of the positive electrode sheet and the negative electrode sheet with active materials constitute the main body of the electrode assembly 22, and the parts of the positive electrode sheet and the negative electrode sheet without active materials each constitute the tab 221. The positive tab and the negative tab can be located together at one end of the main body or at both ends of the main body respectively. During the charge and discharge process of the battery, the positive active material and the negative active material react with the electrolyte, and the tab 221 connects the electrode terminal 21a to form a current loop.

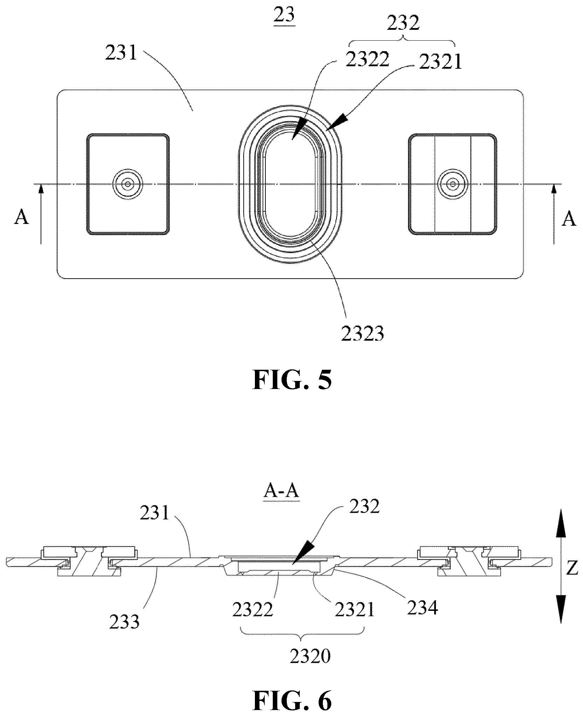

Referring to FIG. 4 to FIG. 6, FIG. 4 is a schematic structural diagram of a housing component provided in some embodiments of the present application, FIG. 5 is a top view of a housing component provided in some embodiments of the present application, and FIG. 6 is a sectional view of the A-A direction of FIG. 5. According to some embodiments of the present application, the present application provides a housing component 23 for a battery cell 20 (see FIG. 3), the housing component 23 has a first surface 231, the first surface 231 is provided with a sink groove 232, the groove bottom wall 2320 of the sink groove 232 includes a first area 2321 and a second area 2322, the thickness of the first area 2321 is less than the thickness of the second area 2322, at least a portion of the first area 2321 is formed with a notch groove 2323, and the housing component 23 is configured to rupture at the notch groove 2323 to release the pressure inside the battery cell 20.

The housing component 23 is a component constituting the housing of the battery cell 20.

The sink groove 232 is a groove formed on the first surface 231, which is formed by being recessed from the first surface 231. The sink groove 232 is a structure of the housing component 23 for pressure relief. The housing component 23 at the sink groove 232 is thinner than the other parts of the housing component 23, so that the battery cell 20 constituted by the housing component 23 can be ruptured at the notch 2323 of the sink groove 232 when thermal runaway occurs, so as to release the pressure inside the battery cell 20.

The first surface 231 is a surface of the housing component 23. The first surface 231 can be the outer surface of the housing component 23, that is, when the housing component 23 and other components constitute a housing, the first surface 231 is the surface away from the inner space of the housing.

The groove bottom wall 2320 is arranged opposite to the opening of the sink groove 232, and the first area 2321 and the second area 2322 are components of the bottom wall 2320, and the first area 2321 and the second area 2322 have a certain thickness.

Since the outer housing component 23 needs to rupture when the battery cell 20 is in thermal runaway to release the pressure inside the battery cell 20, the bottom wall 2320 of the sink groove 232 needs to be thinner. In the present application, the bottom wall 2320 of the sink groove 232 is divided into areas, and the thickness of the first area 2321 and the second area 2322 are different. The first area 2321 is thinner, and at least a portion of the first area 2321 is formed with a notch groove 2323, and the second area 2322 can be thicker, so that the difficulty of processing and manufacturing the outer housing component 23 is reduced, the processing and manufacturing cost is reduced, and the processing and manufacturing cost of the battery cell 20 composed of the outer housing component 23 is reduced.

According to some embodiments of the present application, the first area 2321 surrounds at least part of the second area 2322.

The first area 2321 may surround part of the second area 2322, or the first area 2321 may surround the entire second area 2322, that is, the first area 2321 is arranged around the edge of the second area 2322, and the first area 2321 may surround the edge of the second area 2322 by one circle or less than one circle, so as to facilitate the arrangement of the notch groove 2323, and a longer notch groove 2323 may be arranged. At the same time, the second area 2322 can be opened with the notch groove 2323 as the boundary after the notch groove 2323 is broken, thereby forming a pressure relief channel. It should be noted that after the notch groove 2323 is broken, it may be broken with the notch groove 2323 as the boundary, or it may be broken with the notch groove 2323 and the area near it as the boundary.

According to some embodiments of the present application, the first area 2321 connects the second area 2322 and the groove side wall of the sink groove 232.

The groove side wall of the sink groove 232 refers to the wall of the sink groove 232 surrounding the groove bottom wall 2320.

In the above solution, the first area 2321 is located between the groove side wall of the sink groove 232 and the second area 2322, which is convenient for processing and manufacturing. The first area 2321 can have a larger area, which is convenient for setting a longer notch groove 2323 and facilitating pressure relief.

According to some embodiments of the present application, the notch groove 2323 surrounds at least a portion of the second area 2322.

The notch groove 2323 can surround a portion of the second area 2322, or the notch groove 2323 can surround the entire second area 2322. When the notch groove 2323 surrounds the second area 2322 and the battery cell 20 is in thermal runaway, the notch groove 2323 ruptures, and the second area 2322 is separated from the first area 2321, so that the housing component 23 has a larger pressure relief area.

In the above solution, the notch groove 2323 surrounds at least a portion of the second area 2322, and the notch groove 2323 can have a longer length, which is convenient for opening the second area 2322, so as to facilitate timely pressure relief after the notch groove 2323 ruptures.

Referring to FIG. 5, according to some embodiments of the present application, the notch groove 2323 is a closed annular groove.

The notch groove 2323 is a closed annular groove, and the trajectory of the notch groove 2323 is a circular shape set around the second area 2322, that is, the notch groove 2323 is arranged to surround the second area 2322.

The notch groove 2323 has a relatively long length, and when the battery cell 20 is thermally runaway, it is convenient for the housing component 23 to rupture and release pressure, and after the notch groove 2323 ruptures, the second area 2322 opens to form a pressure relief channel with a larger area.

In the above solution, the notch groove 2323 is a closed annular groove, which is convenient for the notch groove 2323 to rupture and the second area 2322 to open, and the notch groove 2323 has a larger pressure relief channel after rupture.

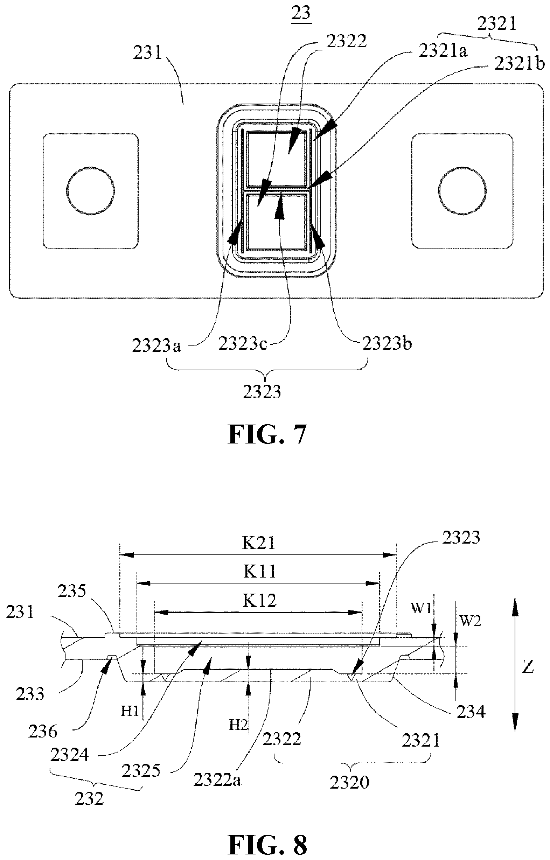

Referring to FIG. 7, which is a top view of the housing component provided in some other embodiments of the present application. According to some embodiments of the present application, the number of the second areas 2322 is two, the first area 2321 includes a first sub-area 2321a and a second sub-area 2321b, the first sub-area 2321a is a annular structure, the first sub-area 2321a surrounds the two second areas 2322, the second sub-area 2321b is located between the two second areas 2322, and the two ends of the second sub-area 2321b are respectively connected to the first sub-area 2321a.

The first sub-area 2321a and the second sub-area 2321b are component areas of the first area 2321, the first sub-area 2321a surrounds the two second areas 2322 and the second sub-area 2321b, the two ends of the second sub-area 2321b are respectively connected to the first sub-area 2321a, and the second sub-area 2321b separates the two second areas 2322.

The notch groove 2323 may be disposed in the first sub-area 2321a, or the notch groove 2323 may be disposed in the second sub-area 2321b, or the notch groove 2323 may also be disposed in the first sub-area 2321a and the second sub-area 2321b.

The extension direction of the notch groove 2323 may be consistent with the extension direction of the first sub-area 2321a. For example, when the notch groove 2323 is disposed in the first sub-area 2321a, the notch groove 2323 may be disposed in a portion of the first sub-area 2321 a, or the notch groove 2323 may surround the two second areas 2322.

In the above solution, the first sub-area 2321a surrounds the two second areas 2322, the second sub-area 2321b is located between the two second areas 2322, and the notch groove 2323 is flexibly arranged to facilitate pressure relief; at the same time, when the housing component 23 is stamped and formed, the stress at the connection between the second sub-area 2321b and the first sub-area 2321a is concentrated, which is easy to rupture and facilitates pressure relief.

Referring to FIG. 7, according to some embodiments of the present application, the notch groove 2323 includes a first sub-notch groove 2323a, a second sub-notch groove 2323b and a third sub-notch groove 2323c, the first sub-notch groove 2323a and the second sub-notch groove 2323b are arranged in the first sub-area 2321a, the third sub-notch groove 2323c is arranged in the second sub-area 2321b, the two second areas 2322 are located between the first sub-notch groove 2323a and the second sub-notch groove 2323b, and the two ends of the third sub-notch groove 2323c are respectively communicated with first sub-notch groove 2323a and the second sub-notch groove 2323b.

The first sub-notch groove 2323a and the second sub-notch groove 2323b are arranged in the first sub-area 2321a, and the first sub-notch groove 2323a and the second sub-notch groove 2323b are arranged along the extension direction of the first sub-area 2321a. The first sub-notch groove 2323a and the second sub-notch groove 2323b are arranged on opposite sides of the two areas.

The third sub-notch groove 2323c is arranged in the second sub-area 2321b, and the two ends of the third sub-notch groove 2323c are respectively communicated with the first sub-notch groove 2323a and the second sub-notch groove 2323b, and the intersection of the third sub-notch groove 2323c and the first sub-notch groove 2323a and the intersection of the third sub-notch groove 2323c and the second sub-notch groove 2323b are easy to break relative to other parts.

In the above solution, the first sub-notch groove 2323a, the second sub-notch groove 2323b and the third sub-notch groove 2323c are arranged at different positions to increase the rupture area of the housing component 23 and facilitate pressure relief.

Referring to FIG. 7, according to some embodiments of the present application, the first sub-notch groove 2323a and the second sub-notch groove 2323b are arranged in parallel.

The third sub-notch groove 2323c intersects with the first sub-notch groove 2323a and the second sub-notch groove 2323b. The third sub-notch groove 2323c can be perpendicular to the first sub-notch groove 2323a and the second sub-notch groove 2323b. As shown in FIG7 , the notch groove 2323 can be in an I-shape.

In the above solution, the first sub-notch groove 2323a and the second sub-notch groove 2323b are arranged in parallel to form an enclosure for the second area 2322, which is convenient for opening the second area 2322 and for processing and manufacturing.

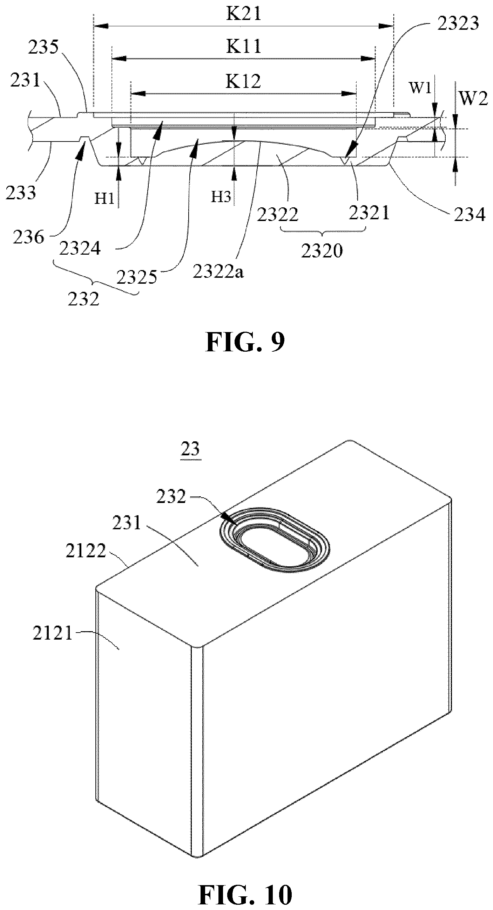

Referring to FIG. 8 and FIG. 9, FIG. 8 is a sectional view of a sink groove of a housing component provided in some embodiments of the present application, and FIG. 9 is a sectional view of a sink groove of a housing component provided in some other embodiments of the present application. According to some embodiments of the present application, the second area 2322 protrudes from the first area 2321 in the direction of the opening of the sink groove 232, and the opening is arranged opposite to the groove bottom wall 2320.

The sink groove 232 is arranged on the first surface 231, and the opening of the sink groove 232 is located on the first surface 231. The opening is arranged opposite to the bottom wall 2320, and the opening and the bottom wall 2320 can be located at two opposite ends of the sink groove 232.

The second area 2322 protrudes from the first area 2321 in the direction of the opening of the sink groove 232, and at least a part of the surface of the second area 2322 facing the opening is closer to the opening than the surface of the first area 2321 facing the opening.

In the above solution, the second area 2322 protrudes from the first area 2321 in the direction of the opening of the sink groove 232, which is convenient for processing and manufacturing, for example, convenient for stamping and forming.

Referring to FIG. 8, according to some embodiments of the present application, the second area 2322 has a second surface 2322a facing the opening, and the second surface 2322a is a plane.

The second surface 2322a is a surface of the second area 2322 facing the opening, and the second surface 2322a is a plane, with a simple structure and easy processing.

According to some embodiments of the present application, the thickness of the first area 2321 is H1, and the thickness of the second area 2322 is H2, satisfying: 0.3mm≤H2-H1 ≤1.5mm.

The thickness of the first area 2321 refers to the size of the first area 2321 in a direction perpendicular to the first surface 231.

The thickness of the second area 2322 refers to the size of the second area 2322 in a direction perpendicular to the first surface 231.

In the above solution, the thickness H1 of the first area 2321 and the thickness H2 of the second area 2322 satisfy the above relationship. On the one hand, the groove bottom wall 2320 can have a higher strength. On the other hand, when stamping and forming, it is convenient for the flow of materials and reduces the manufacturing difficulty. If H2-H1 is small (such as less than 0.3mm), the second area 2322 is thinner, and the processing and manufacturing difficulty is higher; if H2-H1 is large (such as greater than 1.5mm), the first area 2321 is thinner, the strength of the first area 2321 is low, and the notch groove 2323 is easy to crack in advance when the pressure is not released, affecting the service life.

Optionally, H2-H1 can be 0.3mm, 0.4mm, 0.5mm, 0.6mm, 0.7mm, 0.8mm, 0.9mm, 1mm, 1.1mm, 1.2mm, 1.3mm, 1.4mm or 1.5mm.

According to some embodiments of the present application, 0.5mm≤H2-H1≤ 1mm.

Optionally, H2-H1 may be 0.5mm, 0.55mm, 0.6mm, 0.65mm, 0.7mm, 0.75mm, 0.8mm, 0.85mm, 0.9mm, 0.95mm or 1mm.

Compared to 0.3mm≤H2-H1≤1.5 mm, when 0.5mm≤H2-H1≤1mm, the second area 2322 can be thicker, which is convenient for processing and manufacturing, and the strength of the groove bottom wall 2320 is higher.

Referring to FIG. 9, according to some embodiments of the present application, the second area 2322 has a second surface 2322a facing the opening, and the second surface 2322a is a curved surface arched toward the opening.

The second surface 2322a is the surface of the second area 2322 facing the opening, and the second surface 2322a is arched toward the opening. For example, the second surface 2322a can be a curved surface.

In the above solution, the second surface 2322a is arched toward the opening, and the second area 2322 has a higher strength, is easy to process and manufacture, and has a lower difficulty in processing and manufacturing.

According to some embodiments of the present application, the thickness of the first area 2321 is H1, and the maximum thickness of the second area 2322 is H3, satisfying: 0.3mm ≤H3-H1≤2mm.

The maximum thickness of the second area 2322 refers to the maximum size of the second area 2322 in a direction perpendicular to the first surface 231.

In the above solution, the thickness H1 of the first area 2321 and the maximum thickness H3 of the second area 2322 satisfy the above relationship. On the one hand, the groove bottom wall 2320 can have a higher strength. On the other hand, when stamping and forming, it is convenient for the flow of materials and reduces the manufacturing difficulty. If H3-H1 is small (such as less than 0.3mm), the second area 2322 is thinner, and the processing and manufacturing difficulty is higher; if H3-H1 is large (such as greater than 2mm), the first area 2321 is thinner, the strength of the first area 2321 is low, and the notch groove 2323 is easy to crack in advance when the pressure is not released, affecting the service life.

Optionally, H3-H1 can be 0.3mm, 0.4mm, 0.5mm, 0.6mm, 0.7mm, 0.8mm, 0.9mm, 1mm, 1.1mm, 1.2mm, 1.3mm, 1.4mm, 1.5mm, 1.6mm, 1.7mm, 1.8mm, 1.9mm or 2mm.

According to some embodiments of the present application, 0.5mm≤H3-H1≤ 1mm.

Optionally, H3-H1 can be 0.3mm, 0.35mm, 0.4mm, 0.45mm, 0.5mm, 0.55mm, 0.6mm, 0.65mm, 0.7mm, 0.75mm, 0.8mm, 0.85mm, 0.9mm, 0.95mm or 1mm.

In the above solution, compared with 0.3mm≤H3-H1≤2mm, when 0.5mm≤H3-H1≤1mm, the second area 2322 can be thicker, which is convenient for processing and manufacturing, and the strength of the groove bottom wall 2320 is higher.

Referring to FIG. 8 and FIG. 9, according to some embodiments of the present application, the sink groove 232 is a stepped groove, and the stepped groove includes a first groove section 2324 and a second groove section 2325. The first groove section 2324 is closer to the first surface 231 than the second groove section 2325, and the groove bottom wall 2320 is the bottom wall of the second groove section 2325.

The first groove section 2324 and the second groove section 2325 are two-stage groove sections of the sink groove 232. The first groove section 2324 is communicated with the second groove section 2325, and a step surface facing the opening of the sink groove 232 is formed between the first groove section 2324 and the second groove section 2325.

In the above solution, the sink groove 232 is a stepped groove, and the first area 2321 and the second area 2322 are located on the bottom wall of the second groove section 2325, which is convenient for processing and manufacturing; when the sink groove 232 is stamped and formed, it is convenient for material accumulation, and the processing and manufacturing difficulty is relatively low.

According to some embodiments of the present application, the difference between the groove width of the first groove section 2324 and the groove width of the second groove section 2325 is K1, satisfying: 1mm≤K1≤8mm.

As shown in FIG. 8 and FIG. 9, the groove width K11 of the first groove section 2324 refers to the size of the first groove section 2324 in a direction parallel to the first surface 231 in a cross section cut by a plane perpendicular to the first surface 231 and passing through the central axis of the sink groove 232.

The groove width K12 of the second groove section 2325 refers to the size of the second groove section 2325 in a direction parallel to the first surface 231 (for example, the left-right direction shown in FIG. 5) in a cross section cut by a plane perpendicular to the first surface 231 and passing through the central axis of the sink groove 232.

For ease of description, K11 and K12 are shown in FIG.8 and FIG.9, based on which, K1=K11-K12.

In the above solution, the groove width of the first groove section 2324 and the groove width of the second groove section 2325 satisfy the above relationship, which is convenient for processing and manufacturing and occupies a small space; when the sink groove 232 is stamped and formed, it is convenient for material accumulation and the stamping and forming difficulty is low. If K1 is small (less than 1mm), the processing and manufacturing difficulty is high, and the strength of the housing component 23 at the sink groove 232 is low; if K1 is large (such as greater than 8mm), the area of the step surface between the first groove section 2324 and the second groove section 2325 is large, which occupies a large space and wastes materials.

Optionally, K1 may be 1mm, 1.5mm, 2mm, 2.5mm, 3mm, 3.5mm, 4mm, 4.5mm, 5mm, 5.5mm, 6mm, 6.5mm, 7mm, 7.5mm or 8mm.

According to some embodiments of the present application, 4mm≤K1≤6mm.

Optionally, K1 may be 4mm, 4.25mm, 4.5mm, 4.75mm, 5mm, 5.25mm, 5.5mm, 5.75mm or 6mm.

Compared with 1mm≤K1≤8mm, when 4mm≤K1≤6mm, on the one hand, it is convenient for processing and manufacturing, for example, it is convenient for material stacking during stamping and forming; on the other hand, while the strength of the housing component 23 at the sink groove 232 is higher, the sink groove 232 occupies a smaller space.

Referring to FIG. 8 and FIG. 9, according to some embodiments of the present application, the groove depth of the first groove section 2324 is W1, satisfying: 0.1mm≤W1≤ 1mm.

The sink groove 232 is formed on the first surface 231, and the groove depth direction of the sink groove 232 may be perpendicular to the first surface 231. The groove depth of the first groove section 2324 refers to the size of the first groove section 2324 in the direction perpendicular to the first surface 231.

Optionally, W1 may be 0.1 mm, 0.2 mm, 0.3 mm, 0.4 mm, 0.5 mm, 0.6 mm, 0.7 mm, 0.8 mm, 0.9 mm or 1 mm.

In the above solution, the groove depth of the first groove section 2324 satisfies the above relationship, which is convenient for processing and manufacturing, for example, during stamping and forming, it is convenient for material accumulation. If W1 is small (e.g., less than 0.1 mm), the processing technology requirements are high and it is not easy to process and manufacture; if W1 is large (e.g., greater than 1 mm), the groove depth of the second groove section 2325 is small, the thickness of the groove bottom wall 2320 is thin, and the strength of the groove bottom wall 2320 is low.

According to some embodiments of the present application, 0.3mm≤W1≤0.7mm.

Optionally, W1 can be 0.3mm, 0.35mm, 0.4mm, 0.45mm, 0.5mm, 0.55mm, 0.6mm, 0.65mm or 0.7mm.

In the above solution, compared with 0.1mm≤W1≤1mm, when 0.3mm≤W1≤ 0.7mm, it is easy to process and manufacture, and the groove bottom wall 2320 has a higher strength.

Referring to FIG. 8 and FIG. 9, according to some embodiments of the present application, the groove depth of the second groove section 2325 is W2, satisfying: 0.5mm≤W2 ≤4mm.

The sink groove 232 is disposed on the first surface 231, and the groove depth direction of the sink groove 232 may be perpendicular to the first surface 231. The groove depth of the second groove section 2325 refers to the size of the second groove section 2325 in the direction perpendicular to the first surface 231.

Optionally, W2 may be 0.5mm, 1mm, 1.5mm, 2mm, 2.5mm, 3mm, 3.5mm or 4mm.

In the above solution, the groove depth of the second groove section 2325 satisfies the above relationship, which is convenient for processing and manufacturing. For example, during stamping and forming, it is convenient for material accumulation; if the groove depth of the second groove section 2325 is small (such as less than 0.5mm), the groove bottom wall 2320 is thicker, and the processing difficulty of the notch groove 2323 is higher; if the groove depth of the second groove section 2325 is large (such as greater than 4mm), the groove bottom wall 2320 is thinner, and the strength of the groove bottom wall 2320 is lower.

According to some embodiments of the present application, 1.5mm≤W2≤3mm.

Optionally, W2 can be 1.5mm, 1.6mm, 1.7mm, 1.8mm, 1.9mm, 2mm, 2.1mm, 2.2mm, 2.3mm, 2.4mm, 2.5mm, 2.6mm, 2.7mm, 2.8mm, 2.9mm or 3mm.

In the above solution, compared with 0.5mm≤W2≤4mm, when 1.5mm≤W2≤ 3mm, it is convenient to process the notch groove 2323, and the groove bottom wall 2320 is thicker, and the groove bottom wall 2320 has higher strength.

According to some embodiments of the present application, the housing component 23 further has a third surface 233, the third surface 233 and the first surface 231 are arranged opposite to each other along the thickness direction of the housing component 23, and a convex portion 234 is formed on the third surface 233, and the convex portion 234 corresponds to the position of the sink groove 232, and along the thickness direction, the projection of the sink groove 232 falls into the projection of the convex portion 234.

In the figure, the direction indicated by the letter Z is the thickness direction of the housing component 23. The third surface 233 and the first surface 231 are surfaces of the housing component 23 that are perpendicular to the thickness direction of the housing component 23.

The convex portion 234 is formed on the third surface 233 and protrudes from the third surface 233. The convex portion 234 corresponds to the position of the sink groove 232. Along the thickness direction, the projection of the sink groove 232 falls into the projection of the convex portion 234. When the housing component 23 is manufactured, the sink groove 232 can be formed on the first surface 231 and the convex portion 234 can be formed on the third surface 233 by stamping and forming.

In the above solution, the setting of the convex portion 234 facilitates the stamping and forming of the housing component 23, and the difficulty of processing and manufacturing is relatively low.

Referring to FIG. 8 and FIG. 9, according to some embodiments of the present application, the first surface 231 is formed with a protrusion 235, and the protrusion 235 surrounds the sink groove 232. The housing component 23 further has a third surface 233. The third surface 233 and the first surface 231 are arranged opposite to each other along the thickness direction of the housing component 23. The third surface 233 is formed with a first groove 236 at a position corresponding to the protrusion 235.

The protrusion 235 is formed on the first surface 231 and protrudes from the first surface 231, and the protrusion 235 is arranged around the sink groove 232.

The third surface 233 and the first surface 231 are surfaces of the housing component 23 that are perpendicular to the thickness direction of the housing component 23.

The first groove 236 is a groove formed on the third surface 233, and the first groove 236 corresponds to the position of the protrusion 235 in the thickness direction of the housing component 23.

In the above solution, the protrusion 235 can protect the sink groove 232 and reduce the risk of impurities (such as electrolyte, etc.) entering the sink groove 232; the first groove 236 corresponds to the position of the protrusion 235, and the protrusion 235 can be stamped and formed, with low difficulty in processing and manufacturing, and reasonable use of materials.

In addition, the setting of the protrusion 235 facilitates the installation of a protective member to protect the sink groove 232.

According to some embodiments of the present application, the protrusion 235 forms a second groove, the sink groove 232 is a stepped groove, the stepped groove includes a first groove section 2324 and a second groove section 2325, the first groove section 2324 is closer to the first surface 231 than the second groove section 2325, the groove bottom wall 2320 is the bottom wall of the second groove section 2325, and the difference between the groove width of the second groove and the groove width of the first groove section 2324 is K2, satisfying: 1mm≤ K2≤8mm.

A step surface is formed between the first groove section 2324 and the second groove section 2325, and the step surface is arranged facing the opening of the sink groove 232. The first area 2321 and the second area 2322 are arranged on the bottom wall of the second groove section 2325.

The groove width K21 of the second groove refers to the size of the second groove in a direction parallel to the first surface 231 in a cross section cut by a plane perpendicular to the first surface 231 and passing through the central axis of the second groove.

The groove width K11 of the first groove section 2324 refers to the size of the first groove section 2324 in a direction parallel to the first surface 231 in a cross section cut by a plane perpendicular to the first surface 231 and passing through the central axis of the sink groove 232.

The central axis of the second groove is collinear with the central axis of the sink groove 232. The difference between the groove width of the second groove and the groove width of the first groove section 2324 refers to the difference between the size of the second groove in the direction parallel to the first surface 231 and the size of the first groove section 2324 in the direction parallel to the first surface 231 in the cross section cut by a plane perpendicular to the first surface 231 and passing through the central axis of the sink groove 232.

For ease of description, K11 and K21 are shown in FIG. 8 and FIG. 9, based on which K2=K21-K11.

In the above solution, the groove width of the second groove and the groove width of the first groove section 2324 satisfy the above relationship, the difficulty of processing and manufacturing is low, and the second groove occupies a small space; if K2 is large (such as greater than 8mm), the structural space is wasted; if K2 is small (such as less than 1mm), the processing accuracy requirement is high, and the processing and manufacturing difficulty is high.

Optionally, K2 can be 1mm, 2mm, 3mm, 4mm, 5mm, 6mm, 7mm and 8mm.

According to some embodiments of the present application, 2mm≤K2≤4mm.

Optionally, K2 can be 2mm, 2.25mm, 2.5mm, 2.75mm, 3mm, 3.25mm, 3.5mm, 3.75mm or 4mm.

In the above solution, compared with 1mm≤K2≤8mm, when 2mm≤K2≤4mm, the second groove occupies less space and is less difficult to manufacture.

Referring to FIGS. 4 to 7, according to some embodiments of the present application, the housing component 23 is an end cover 211, and the end cover 211 is configured to close the opening of the shell body 212 of the battery cell 20.

It is possible that the first surface 231 is the outer surface of the end cover 211, and the third surface 233 is the inner surface of the end cover 211; or it is also possible that the first surface 231 is the inner surface of the end cover 211, and the third surface 233 is the outer surface of the end cover 211. The outer surface of the end cover 211 is the surface of the end cover 211 that faces away from the shell body 212, and the inner surface of the end cover 211 is the surface of the end cover 211 that faces toward the shell body 212.

In the above solution, the end cover 211 has a pressure relief function, and a pressure relief structure is formed by forming a notch groove 2323 on the end cover 211. The pressure relief structure has good stability and good long-term reliability.

In some embodiments, the first surface 231 is the surface of the end cover 211 that faces away from the shell body 212. The surface of the end cover 211 facing away from the shell body 212 is the outer surface of the end cover 211. Even if the outer surface of the end cover 211 is blocked by an obstacle, the notch groove 2323 can still rupture to release the pressure inside the battery cell 20.

According to some embodiments of the present application, the thickness of the second area 2322 is less than the thickness of the end cover 211.

The thickness of the end cover 211 refers to the thickness of the area of the end cover 211 where no through hole, step hole, recessed portion or other structure are provided. In the embodiment where the housing component 23 includes the third surface 233, the thickness of the end cover 211 can be the distance between the first surface 231 and the third surface 233 in a direction perpendicular to the first surface 231. The thickness of the second area 2322 can be the maximum thickness of the groove bottom wall 2320. When the second surface 2322a of the second area 2322 is a curved surface, the thickness of the second area 2322 can be the maximum thickness of the second area 2322.

The thickness of the second area 2322 is less than the thickness of the end cover 211, and the strength of the groove bottom wall 2320 can be weaker than the strength of the portion of the end cover 211 where no through hole, step hole, recessed portion or other structures are provided, so that the notch groove 2323 of the groove bottom wall 2320 can be easily broken when the battery cell 20 is in thermal runaway, so as to release the pressure inside the battery cell 20.

Referring to FIG. 3 and FIG. 10, FIG. 10 is a schematic structural diagram of the housing component provided in some other embodiments of the present application. According to some embodiments of the present application, the housing component 23 is a shell body 212, and the shell body 212 includes a plurality of wall portions, and the plurality of wall portions jointly define an accommodating space, and the accommodating space is configured to accommodate the electrode assembly 22 of the battery cell 20, and the sink groove 232 is formed in at least one of the plurality of wall portions.

In the shell body 212, the sink groove 232 can be formed in one wall portion or in a plurality of wall portions. If multiple wall portions are formed with recessed grooves 232, the shell body 212 has multiple first surfaces 231 correspondingly. The first surface 231 may be the outer surface of the wall portion or the inner surface of the wall portion. The outer surface of the wall portion is the surface of the wall portion facing away from the electrode assembly 22, and the inner surface of the wall portion is the surface of the wall portion facing the electrode assembly 22.

In the above solution, the housing component 23 has both the function of accommodating the electrode assembly 22 and the function of relieving pressure.

In some embodiments, the shell body 212 includes a peripheral wall 2121 and a bottom wall 2122, the peripheral wall 2121 is arranged around the edge of the bottom wall 2122, the peripheral wall 2121 and the bottom wall 2122 jointly define a accommodating space, the end of the peripheral wall 2121 opposite to the bottom wall 2122 forms an opening, and the sink groove 232 is arranged on the bottom wall 2122.

The peripheral wall 2121 is arranged around the edge of the bottom wall 2122, so that the shell body 212 can form an opening at the end opposite to the bottom wall 2122, and the end cover 211 is configured to cover the opening. The peripheral wall 2121 and the bottom wall 2122 are of an integrally formed structure.

In the embodiment where the shell body 212 is a cylinder, the shell body 212 may have two wall portions, one wall portion is a bottom wall 2122, and the other wall portion is a cylindrical peripheral wall 2121. In the embodiment where the shell body 212 is a cuboid, the shell body 212 may have five wall portions, the five wall portions include a bottom wall 2122 and four side walls, and the four side walls are connected end to end in sequence to form the peripheral wall 2121.

In the above solution, since the sink groove 232 is provided on the bottom wall 2122, the bottom wall 2122 of the shell body 212 has a pressure relief function, which is convenient for releasing the pressure inside the accommodation space.

In some embodiments, the first surface 231 is the outer surface of the wall portion.

It can be understood that in the embodiment where the sink groove 232 is formed on the bottom wall 2122, the first surface 231 is the outer surface of the bottom wall 2122.

When forming the sink groove 232 and the notch groove 2323 on the wall portion, the notch groove 2323 can be processed and formed on the outer side of the wall portion, which is more convenient to form.

According to some embodiments of the present application, the thickness of the second area 2322 is less than the thickness of the wall portion formed with the sink groove 232.

The thickness of the wall formed with the sink groove 232 refers to the thickness of the area of the wall where no through hole, a step hole, a recessed portion or other structures are provided. In the embodiment where the housing component 23 includes a third surface 233, the thickness of the wall formed with the sink groove 232 can be the distance between the first surface 231 and the third surface 233 in a direction perpendicular to the first surface 231. The thickness of the second area 2322 can be the maximum thickness of the groove bottom wall 2320. When the second surface 2322a of the second area 2322 is a curved surface, the thickness of the second area 2322 can be the maximum thickness of the second area 2322.

The thickness of the second area 2322 is less than the thickness of the wall portion where the sink groove 232 is provided, and the strength of the bottom wall 2320 may be weaker than the strength of the portion of the wall portion where no through hole, step hole, recessed portion or other structure are provided, so that the notch groove 2323 of the groove bottom wall 2320 is easily broken when the battery cell 20 is in thermal runaway, so as to release the pressure inside the battery cell 20.

According to some embodiments of the present application, the present application embodiment also provides a battery cell 20, including the housing component 23 provided in any of the above embodiments.

According to some embodiments of the present application, the present application embodiment also provides a battery, including the battery cell 20 provided in any of the above embodiments.

According to some embodiments of the present application, the present application embodiment also provides an electrical device, including the battery 100 provided in any of the above embodiments.

The electrical device may be any of the above-mentioned devices using the battery.

According to some embodiments of the present application, please refer to FIG. 3 to FIG. 9. The embodiments of the present application provide an end cover 211, which has a first surface 231 and a third surface 233 opposite to each other in the thickness direction thereof. The first surface 231 is formed with a sink groove 232, and the third surface 233 is formed with a convex portion 234. The convex portion 234 corresponds to the position of the sink groove 232. Along the thickness direction, the projection of the recessed groove 232 falls into the projection of the convex portion 234. The sink groove 232 is a stepped groove, which includes a first groove section 2324 and a second groove section 2325. The first groove section 2324 is closer to the first surface 231 than the second groove section 2325. The bottom wall 2122 of the second groove section 2325 is the groove bottom wall 2320 of the sink groove 232. The groove bottom wall 2320 includes a first area 2321 and a second area 2322. The first area 2321 is arranged around the second area 2322, and the first area 2321 connects the second area 2322 and the groove side wall of the sink groove 232. The notch groove 2323 is arranged around the first area 2321 and surrounds the second area 2322. The thickness of the first area 2321 is less than the thickness of the second area 2322. The second area 2322 protrudes from the first area 2321 in the direction of the opening of the sink groove 232, and the opening is arranged opposite to the bottom wall 2320 of the sink groove; the second area 2322 has a second surface 2322a facing the opening, and the second surface 2322a is a plane.

Although the present application has been described with reference to the preferred embodiment, various improvements may be made and the components thereof may be replaced with equivalents without departing from the scope of the present application. In particular, as long as there is no structural conflict, the various technical features mentioned in the various embodiments can be combined in any manner. The present application is not limited to the specific embodiments disclosed herein, but includes all technical solutions falling within the scope of the claims.

## Claims

1. A housing component for a battery cell, having a first surface, wherein the first surface is formed with a sink groove, a groove bottom wall of the sink groove comprises a first area and a second area, a thickness of the first area is less than a thickness of the second area, at least a portion of the first area is formed with a notch groove, and the housing component is configured to rupture at the notch groove to release a pressure inside the battery cell.

2. The housing component according to claim 1, wherein the first area surrounds at least a portion of the second area.

3. The housing component according to claim 2, wherein the first area connects the second area and a groove side wall of the sink groove.

4. The housing component according to claim 2, wherein the notch surrounds at least a portion of the second area.

5. The housing component according to claim 4, wherein the notch is a closed annular groove.

6. The housing component according to any one of claims 1-4, wherein there are two second areas, the first area comprises a first sub-area and a second sub-area, the first sub-area is of an annular structure, the first sub-area surrounds the two second areas, the second sub-area is located between the two second areas, and two ends of the second sub-area are respectively connected to the first sub-area.

7. The housing component according to claim 6, wherein the notch groove comprises a first sub-notch groove, a second sub-notch groove and a third sub-notch groove, the first sub-notch groove and the second sub-notch groove are formed in the first sub-area, the third sub-notch groove is formed in the second sub-area, the two second areas are located between the first sub-notch groove and the second sub-notch groove, and two ends of the third sub-notch groove are respectively connected to the first sub-notch groove and the second sub-notch groove.

8. The housing component according to claim 7, wherein the first sub-notch groove and the second sub-notch groove are formed in parallel.

9. The housing component according to any one of claims 1-8, wherein the second area protrudes from the first area in a direction of an opening of the sink groove, and the opening is formed opposite to the groove bottom wall of the sink groove.

10. The housing component according to claim 9, wherein the second area has a second surface facing the opening, and the second surface is a plane.

11. The housing component according to claim 10, wherein the thickness of the first area is H1, and the thickness of the second area is H2, satisfying: 0.3mm≤H2-H1≤1.5mm.

12. The housing component according to claim 11, wherein 0.5mm≤1mm.

13. The housing component according to claim 9, wherein the second area has a second surface facing the opening, and the second surface is a curved surface arched toward the opening.

14. The housing component according to claim 13, wherein the thickness of the first area is H1, a maximum thickness of the second area is H3, satisfying: 0.3mm≤H3-H1≤2mm.

15. The housing component according to claim 14, wherein 0.5mm≤H3-H1≤1mm.

16. The housing component according to any one of claims 1 to 15, wherein the sink groove is a stepped groove, the stepped groove comprises a first groove section and a second groove section, the first groove section is closer to the first surface than the second groove section, and the groove bottom wall is a bottom wall of the second groove section.

17. The housing component according to claim 16, wherein a difference between a groove width of the first groove section and a groove width of the second groove section is K1, satisfying: 1mm≤K1≤8mm.

18. The housing component according to claim 17, wherein 4mm≤K1≤6mm.

19. The housing component according to any one of claims 16 to 18, wherein a groove depth of the first groove section is W1, satisfying: 0.1mm≤W1≤1mm.

20. The housing component according to claim 19, wherein 0.3mm≤W1≤0.7mm.

21. The housing component according to any one of claims 16-20, wherein a groove depth of the second groove section is W2, satisfying: 0.5mm≤W2≤4mm.

22. The housing component according to claim 21, wherein 1.5mm≤W2≤3mm.

23. The housing component according to any one of claims 1-22, wherein the housing component further has a third surface, the third surface is arranged opposite to the first surface along a thickness direction of the housing component, the third surface is formed with a convex portion, the convex portion corresponds to a position of the sink groove, and a projection of the sink groove falls into a projection of the convex portion along the thickness direction.

24. The housing component according to any one of claims 1-23, wherein the first surface is formed with a protrusion, the protrusion surrounds the sink groove, the housing component further has a third surface, the third surface is arranged opposite to the first surface along a thickness direction of the housing component, and the third surface is formed with a first groove at a position corresponding to the protrusion.

25. The housing component according to claim 24, wherein the protrusion encloses a second groove, the sink groove is a stepped groove, the stepped groove includes a first groove section and a second groove section, the first groove section is closer to the first surface than the second groove section, the groove bottom wall is a bottom wall of the second groove section, a difference between a groove width of the second groove and a groove width of the first groove section is K2, satisfying: 1mm≤K2≤8mm.

26. The housing component according to claim 25, wherein 2mm≤K2≤4mm.

27. The housing component according to any one of claims 1-26, wherein the housing component is an end cover, and the end cover is configured to close an opening of the shell body of the battery cell.

28. The housing component according to claim 27, wherein the thickness of the second area is less than a thickness of the end cover.

29. The housing component according to any one of claims 1-26, wherein the housing component is a shell body, the shell body comprises a plurality of wall portions, the plurality of wall portions jointly define a accommodating space, the accommodating space is configured for accommodating an electrode assembly of the battery cell, and the sink groove is formed in at least one of the plurality of wall portions.

30. The housing component according to claim 29, wherein the thickness of the second area is less than a thickness of the wall portion formed with the sink groove.

31. A battery cell, comprising the housing component according to any one of claims 1-30.

32. A battery, comprising the battery cell according to claim 31.

33. An electrical device, comprising the battery according to claim 32.
